# EUROPEAN PATENT APPLICATION

(11) **EP 4 641 985 A1**
(43) Date of publication of application: **29.10.2025**
(21) Application number: 22968813.0
(22) Date of filing: 19.12.2022
(51) Int. Cl.: H04L 27/00

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); SHEN, Yang, Beijing 100085 (CN)
(74) Representative: Dehns Germany Partnerschaft mbB
(86) International application number: PCT/CN2022/140131
(87) International publication number: WO 2024/130509

(57) **Abstract**

Embodiments of the present disclosure relate to an information transmission method and apparatus, a communication device, and a storage medium. A policy control function (PCF) formulates a quality of service (QoS) monitoring policy and sends same to a session management function (SMF), wherein the QoS monitoring policy is at least associated with QoS monitoring of a satellite backhaul link.

## Description

### FIELD

The present disclosure relates to, but is not limited to, the field of wireless communication technology, and in particular to an information transmission method and apparatus, a communication device, and a storage medium.

### BACKGROUND

Control plane data (i.e., signaling interaction) and user plane data (i.e., traffic interaction data) between a user equipment and a mobile communication core network may use a space-based backhaul network. The space-based backhaul network may include a satellite backhaul network developed based on a single satellite, or a satellite backhaul network based on starlink. The satellite backhaul network based on Starlink may include a plurality of satellites for data transmission. How to ensure that data transmission of the satellite backhaul network can meet traffic needs is an urgent problem to be solved.

### SUMMARY

In view of the above, embodiments of the present disclosure provide an information transmission method and apparatus, a communication device, and a storage medium.

According to a first aspect of an embodiment of the present disclosure, there is provided an information transmission method. The method is performed by a policy control function (PCF) and includes: formulating a quality of service (QoS) monitoring policy and sending the QoS monitoring policy to a session management function (SMF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, formulating the QoS monitoring policy and sending the QoS monitoring policy to the SMF includes: formulating the QoS monitoring policy and sending the QoS monitoring policy to the SMF, in response to receiving, by the PCF, indication information that a user equipment (UE) communicates through the satellite backhaul link.

In an embodiment, the method further includes: receiving a QoS monitoring report sent by the SMF, in which, the QoS monitoring report is at least configured to indicate a delay of the satellite backhaul link.

In an embodiment, the method further includes: formulating or updating a QoS control policy and/or a charging policy according to the delay of the satellite backhaul link.

According to a second aspect of an embodiment of the present disclosure, there is provided an information transmission method. The method is performed by a session management function (SMF) and includes: receiving a quality of service (QoS) monitoring policy sent by a policy control function (PCF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, the QoS monitoring policy is formulated and sent by the PCF in response to determining that a user equipment (UE) communicates through the satellite backhaul link.

In an embodiment, the method further includes: sending the QoS monitoring policy to a UPF.

In an embodiment, the method further includes: receiving a QoS monitoring report sent by the UPF based on the QoS monitoring policy, in which, the QoS monitoring report is at least configured to indicate a delay of the satellite backhaul link.

In an embodiment, receiving the QoS monitoring report sent by the UPF based on the QoS monitoring policy includes: receiving QoS monitoring reports respectively sent by a plurality of UPFs; in which, the method further includes: determining delays of satellite backhaul links corresponding to respective UPFs according to the QoS monitoring report; selecting a satellite backhaul link between a UPF and an RAN based on the delays of the satellite backhaul links corresponding to respective UPFs.

In an embodiment, the method further includes: sending the QoS monitoring report to the PCF.

According to a third aspect of an embodiment of the present disclosure, there is provided an information transmission method. The method is performed by a user plane function (UPF), and includes: receiving a quality of service (QoS) monitoring policy sent by a session management function (SMF), in which, the QoS monitoring policy is at least associated with QoS monitoring of a satellite backhaul link, the QoS monitoring policy is sent by a policy control function (PCF) to the SMF.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between the UPF and a radio access network (RAN), in which, the UPF and the RAN establish the satellite backhaul link through at least one satellite.

In an embodiment, the QoS monitoring policy is formulated and sent by the PCF to the SMF in response to determining that a user equipment (UE) communicates through the satellite backhaul link.

In an embodiment, the method further includes: measuring and determining a delay of the satellite backhaul link based on the QoS monitoring policy.

In an embodiment, the method further includes at least one of: sending a QoS monitoring report to the SMF; or sending the QoS monitoring report to a sending object indicated by the QoS monitoring policy; in which, the QoS monitoring report is at least configured to indicate the delay of the satellite backhaul link.

According to a fourth aspect of an embodiment of the present disclosure, there is provided an information transmission apparatus. The apparatus is performed by a policy control function PCF, and includes: a transceiver module, configured to formulate a quality of service (QoS) monitoring policy and send the QoS monitoring policy to a session management function (SMF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, the transceiver module is specifically configured to: formulate the QoS monitoring policy and send the QoS monitoring policy to the SMF, in response to receiving, by the PCF, indication information that a user equipment (UE) communicates through the satellite backhaul link.

In an embodiment, the transceiver module is further configured to: receive a QoS monitoring report sent by the SMF, in which, the QoS monitoring report is at least configured to indicate a delay of the satellite backhaul link.

In an embodiment, the apparatus further includes: a processing module, configured to formulate or update a QoS control policy and/or a charging policy according to the delay of the satellite backhaul link.

According to a fifth aspect of an embodiment of the present disclosure, there is provided an information transmission apparatus. The apparatus is performed by a session management function (SMF) and includes: a transceiver module, configured to receive a quality of service (QoS) monitoring policy sent by a policy control function (PCF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, the QoS monitoring policy is formulated and sent by the PCF in response to determining that a user equipment (UE) communicates through the satellite backhaul link.

In an embodiment, the transceiver module is further configured to: send the QoS monitoring policy to a UPF.

In an embodiment, the transceiver module is further configured to: receive a QoS monitoring report sent by the UPF based on the QoS monitoring policy, in which, the QoS monitoring report is at least configured to indicate a delay of the satellite backhaul link.

In an embodiment, the transceiver module is specifically configured to: receive QoS monitoring reports respectively sent by a plurality of UPFs; in which, the apparatus further includes: a processing module, configured to determine delays of satellite backhaul links corresponding to respective UPFs according to the QoS monitoring report; further configured to select a satellite backhaul link between a UPF and an RAN based on the delays of the satellite backhaul links corresponding to respective UPFs.

In an embodiment, the transceiver module is further configured to: send the QoS monitoring report to the PCF.

According to a sixth aspect of an embodiment of the present disclosure, there is provided an information transmission apparatus. The apparatus is performed by a user plane function (UPF), and includes: a transceiver module, configured to receive a quality of service (QoS) monitoring policy sent by a session management function (SMF), in which, the QoS monitoring policy is at least associated with QoS monitoring of a satellite backhaul link, the QoS monitoring policy is sent by a policy control function (PCF) to the SMF.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between the UPF and a radio access network (RAN), in which, the UPF and the RAN establish the satellite backhaul link through at least one satellite.

In an embodiment, the QoS monitoring policy is formulated and sent by the PCF to the SMF in response to determining that a user equipment (UE) communicates through the satellite backhaul link.

In an embodiment, the apparatus further includes: a processing module, configured to measure and determine a delay of the satellite backhaul link based on the QoS monitoring policy.

In an embodiment, the transceiver module is further configured to perform at least one of: sending a QoS monitoring report to the SMF; or sending the QoS monitoring report to a sending object indicated by the QoS monitoring policy; in which, the QoS monitoring report is at least configured to indicate the delay of the satellite backhaul link.

According to a seventh aspect of an embodiment of the present disclosure, there is provided a communication device, including: a processor; and a memory configured to store instructions executable by the processor, in which, the processor is configured to: implement the information transmission method according to the first aspect or the second aspect or the third aspect when executing the executable instructions.

According to an eighth aspect of an embodiment of the present disclosure, there is provided a computer storage medium, where the computer storage medium stores a computer executable program, and the executable program, when executed by a processor, causes the information transmission method according to the first aspect or the second aspect or the third aspect to be implemented.

According to a ninth aspect of an embodiment of the present disclosure, there is provided a communication system. The communication system includes a policy control function (PCF), a session management function (SMF) and a user plane function (UPF), where the PCF is configured to implement the method according to the first aspect, the SMF is configured to implement the method according to the second aspect, and the UPF is configured to implement the method according to the third aspect.

According to a tenth aspect of an embodiment of the present disclosure, there is provided a communication method. The method is performed by a core network device, and includes: in response to receiving indication information that a user equipment (UE) communicates through a satellite backhaul link, formulating or updating a quality of service (QoS) control policy and/or a charging policy; measuring and determining a delay of the satellite backhaul link based on a QoS monitoring policy.

According to an eleventh aspect of an embodiment of the present disclosure, there is provided a communication method. The method is performed by a core network device. The core network device includes a policy control function (PCF), a session management function (SMF) and a user plane function (UPF). The method includes: formulating, by the PCF, a quality of service (QoS) monitoring policy and sending, by the PCF, the QoS monitoring policy to the SMF, in which, the QoS monitoring policy is at least associated with QoS monitoring of a satellite backhaul link; sending, by the SMF, the QoS monitoring policy to the UPF; measuring and determining, by the UPF, a delay of the satellite backhaul link based on the QoS monitoring policy; sending, by the UPF, a QoS monitoring report to the SMF, in which, the QoS monitoring report is at least configured to indicate the delay of the satellite backhaul link; sending, by the SMF, the QoS monitoring report to the PCF.

According to a twelfth aspect of an embodiment of the present disclosure, there is provided a communication system, configured to perform the method according to the tenth aspect.

The information transmission method and apparatus, the communication device and the storage medium are provided by embodiments of the present disclosure. The PCF formulates the QoS monitoring policy and sends the QoS monitoring policy to the SMF, where the QoS monitoring policy is at least associated with the QoS monitoring of the satellite backhaul link. In this way, with sending, to the SMF by the PCF, the QoS monitoring policy associated with the QoS monitoring of the satellite backhaul link, monitoring the QoS of the satellite backhaul link can be implemented, which can then be taken as a basis for selecting the satellite backhaul link and dynamically update the QoS control policy of a traffic using the backhaul link according to the delay of the satellite backhaul link, and further improve control of the satellite backhaul link.

It should be understood that the foregoing general description and the following detailed description are illustrative and explanatory only and are not to limit the embodiments of the present disclosure.

### BRIEF DESCRIPTION OF THE DRAWINGS

The accompanying drawings, which are incorporated into the specification and constitute a part of the specification, illustrate embodiments consistent with the present disclosure and are used to explain, in combination with the description, principles of the embodiments of the present disclosure.
FIG. 1 is a schematic structural diagram of a wireless communication system according to an illustrative embodiment.
FIG. 2 is a schematic structural diagram of a satellite backhaul link according to an illustrative embodiment.
FIG. 3 is a schematic structural diagram of a satellite backhaul link according to an illustrative embodiment.
FIG. 4 is a schematic flow chart of an information transmission method according to an illustrative embodiment.
FIG. 5 is a schematic flow chart of an information transmission method according to an illustrative embodiment.
FIG. 6 is a schematic flow chart of an information transmission method according to an illustrative embodiment.
FIG. 7 is a schematic flow chart of an information transmission method according to an illustrative embodiment.
FIG. 8 is a schematic flow chart of an information transmission method according to an illustrative embodiment.
FIG. 9 is a schematic flow chart of an information transmission method according to an illustrative embodiment.
FIG. 10 is a schematic flow chart of an information transmission method according to an illustrative embodiment.
FIG. 11 is a schematic flow chart of an information transmission method according to an illustrative embodiment.
FIG. 12 is a schematic flow chart of an information transmission method according to an illustrative embodiment.
FIG. 13 is a schematic flow chart of an information transmission method according to an illustrative embodiment.
FIG. 14 is a schematic flow chart of an information transmission method according to an illustrative embodiment.
FIG. 15 is a block diagram of an information transmission apparatus according to an illustrative embodiment.
FIG. 16 is a block diagram of an information transmission apparatus according to an illustrative embodiment.
FIG. 17 is a block diagram of an information transmission apparatus according to an illustrative embodiment.
FIG. 18 is a block diagram of a UE according to an illustrative embodiment.
FIG. 19 is a block diagram of a base station according to an illustrative embodiment.

### DETAILED DESCRIPTION

Illustrative embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of devices and methods consistent with some aspects of the embodiments of the present disclosure as recited in the appended claims.

The terms used in the disclosure are only for the purpose of describing specific embodiments, and are not intended to limit the embodiments of the disclosure. The singular forms of "a", "said" and "the" used in the disclosure and attached claims are also intended to include plural forms, unless the context clearly indicates other meanings. It is understandable that the term "and/or" as used herein refers to and includes any or all possible combinations of one or more associated listed items.

It is understandable that terms such as "first", "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

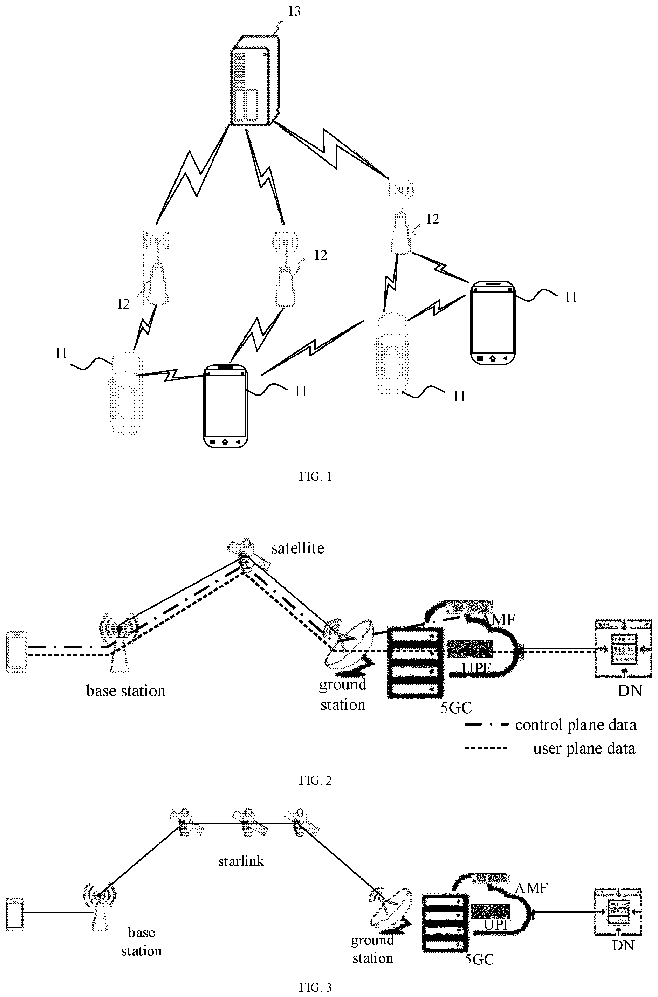

Referring to FIG. 1, FIG. 1 shows a schematic structural diagram of a wireless communication system provided by an embodiment of the present disclosure. As shown in FIG. 1, the wireless communication system may include at least one terminal 11 and at least one base station 12.

The terminal 11 may be a device that provides voice and/or data connectivity to a user. The terminal 11 may communicate with one or more core networks via a radio access network (RAN), and the terminal 11 may be a terminal in an Internet of Things (IoT), such as a sensor device, a mobile phone (or referred to as a "cellular" phone) and a computer including an IoT terminal device. For example, the terminal 11 may be a fixed device, a portable device, a pocket device, a hand-held device, a computer built-in device or a vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment. Alternatively, the terminal 11 may also be a device of an unmanned aerial vehicle. Alternatively, the terminal 11 may also be a vehicle-mounted device, for example, it may be a trip computer with a wireless communication function, or a wireless communication device connected externally to the trip computer. Alternatively, the terminal 11 may also be a roadside device, for example, it may be a street lamp, a signal lamp, or other roadside devices with a wireless communication function.

The base station 12 may be a network-side device in the wireless communication system. The wireless communication system may be the 4th generation (4G) mobile communication system, also referred to as a long term evolution (LTE) system, or the wireless communication system may be a 5G system, also referred to as a new radio (NR) system or 5G NR system. Alternatively, the wireless communication system may be a next-generation system of the 5G system. A radio access network in the 5G system is referred to as new generation-radio access network (NG-RAN).

The base station 12 may be a network device in a wireless communication system. The wireless communication system may be the 4th generation (4G) mobile communication system, also known as a long term evolution (LTE) system. Alternatively, the wireless communication system may be a the 5th generation (5G) mobile communication system, also known as a new radio (NR) system or a 5G NR system. Alternatively, the wireless communication system may be the next generation system of the 5G system. The access network in the 5G system may be referred to as NG-RAN (new generation-radio access network), or an MTC system.

The base station 12 may be an evolved node B (eNB) in the 4G system. Alternatively, the base station 12 may be a next-generation node B (gNB) adopting a centralized and distributed architecture in the 5G system. When the base station 12 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the base station 12 is not limited in the embodiments of the present disclosure.

A wireless connection may be established between the base station 12 and the terminal 11 through a wireless radio interface. In different embodiments, the wireless radio interface is a wireless radio interface based on the 4th generation (4G) mobile communication network technology standard, or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, E2E (End to End) connection may also be established between the terminals 11, such as V2V (vehicle to vehicle) communication, V2I (vehicle to Infrastructure) communication, and V2P (vehicle to pedestrian) communication in vehicle to everything (V2X) communication.

In some embodiments, the wireless communication system may further include a network management device 13.

Several base stations 12 are connected to the network management device 13. The network management device 13 may be a core network device in the wireless communication system, for example, the network management device 13 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 13 is not limited in the embodiments of the present disclosure.

In order to facilitate the understanding for those skilled in the art, embodiments of the present disclosure include multiple implementations to clearly illustrate technical solutions of the embodiments of the present disclosure. Of course, those skilled in the art may understand that multiple embodiments provided by the embodiments of the present disclosure may be executed separately, or may be executed together with methods of other embodiments of the present disclosure, or may be executed together with some methods in other related technologies separately or in combination, which are not limited by the embodiments of the present disclosure.

As illustrated in FIG. 2, in the 3GPP R17 (Release 17), the standard defines the use of a satellite connection as a backhaul link for data transmission between an access network (such as NR) and a core network (such as a 5G core network), and assumes that control plane data (i.e., signaling interaction) and user plane data (i.e., service interaction data) between a UE and the core network use the same satellite backhaul network, and use a single satellite to establish the backhaul link.

As illustrated in FIG. 3, in 3GPP R18 (Release 18), the standard defines a need to use a satellite network to establish a dynamic backhaul between an access network (such as gNB) and ca ore network (such as a 5G core network). That is, a starlink consisting of a plurality of satellites can be used as a satellite backhaul link between gNB and 5G core network, and each user/traffic can use a different satellite backhaul link.

Different satellite backhaul links (i.e., different satellite backhaul networks) composed of different satellites have different delays and different QoSs. Therefore, when accessing the network or conducting traffic, a user (UE) needs to consider the delays of various satellite backhaul links, etc., to select a satellite backhaul link, or evaluate and use a satellite backhaul link that meet a delay requirement. Furthermore, when formulating a QoS control policy for the traffic, it is also necessary to consider the delay of the satellite backhaul link. Since the delay of the satellite backhaul link is dynamic, it is necessary to combine a delay measurement mechanism to obtain the delay of the satellite backhaul link.

A QoS monitoring mechanism is used for a delay measurement for a traffic data flow under an ultra-reliable low-latency communications (uRLLC) traffic, an implementation mechanism of which is as follows.

If a PCF decides that it is necessary to perform delay detection on the traffic data flow of the URLLC, a PCC rule issued need to include a QoS monitoring policy, which includes the following elements.

| | |
|---|---|
| QoS parameter(s) to be measured | Uplink (UL) packet delay, downlink (DL) packet delay or round trip packet delay. |
| Reporting frequency | Defines a frequency for reporting, such as event triggered, periodic, when no packet delay measurement result is received for a delay exceeding a threshold, or when a PDU Session is released. |
| Target of reporting | Defines a target of QoS Monitoring reports, it can be the PCF or an application function (AF) or a local network exposure function (NEF), decided by the PCF. |
| Indication of direct event noti fication | Indicates that a QoS Monitoring event shall be reported by a user plane f unction (UPF) directly to a network function (NF) indicated by the Target of reporting. |

When receiving the PCC rule of the PCF that includes the above QoS monitoring policy, the SMF sends a QoS monitoring indication to the UPF through an N4 interface and to an RAN through an N2 interface. After receiving the QoS monitoring indication, the RAN completes delay monitoring on a wireless side and reports a delay monitoring result to the UPF. The UPF completes delay monitoring between the UE and the UPF. The UPF reports the delay between the UE and the UPF (the delay on the wireless side plus the delay between the RAN and the UPF) to the SMF according to the QoS monitoring policy (e.g., reporting based on time, periodic reporting, etc.), and reports the delay between the UE and the UPF to any network elements (e.g., the PCF, the AF, etc.) that require the information through relevant mechanisms.

The QoS monitoring mechanism implements delay detection and reporting mechanism for the data flow between the UE and the UPF. In a satellite backhaul (starlink backhaul) scenario involving a plurality of satellites, it is necessary to detect and obtain a delay between the gNB and the UPF. The current QoS monitoring mechanism cannot be applied to a delay detection for the starlink backhaul in the starlink backhaul scenario.

Therefore, how to detect the delay of the starlink backhaul link and obtain a detection report, further select the starlink backhaul link based on the delay of the starlink backhaul link, and implement QoS control for the traffic based on the delay of the starlink backhaul link are urgent issues to be addressed.

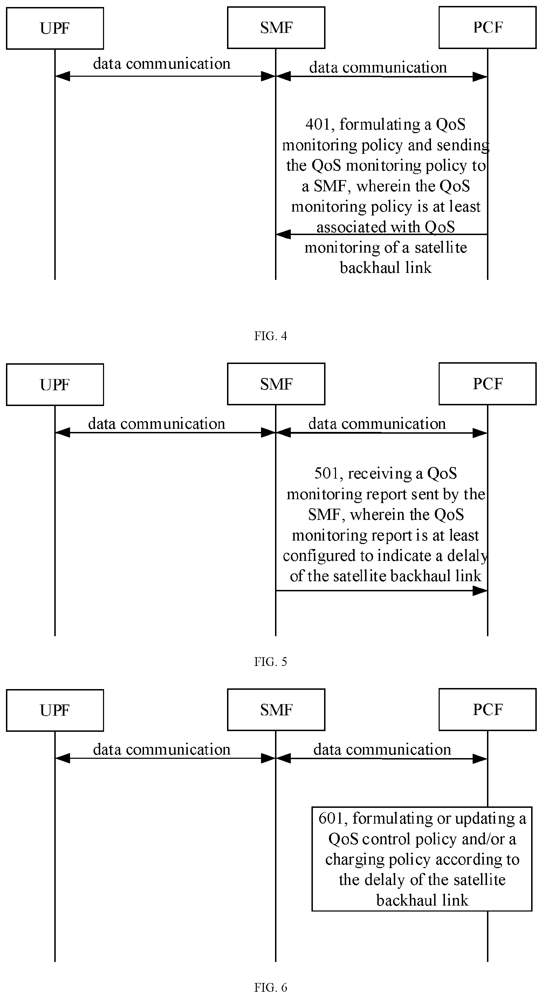

As shown in FIG. 4, an illustrative embodiment provides an information transmission method, which may be performed by a policy control function (PCF), and may include the following step.

Step 401, a quality of service (QoS) monitoring policy is formulated and sent to a session management function (SMF). The QoS monitoring policy is at least associated with QoS monitoring of a satellite backhaul link.

The satellite backhaul link may include, but is not limited to, at least one of: a static satellite backhaul link; or a dynamic satellite backhaul link.

In a possible implementation, as shown in FIG. 2, the static satellite backhaul link is a satellite backhaul link implemented between an RAN and a UPF through a single satellite. When the satellite backhaul link is implemented by a single satellite, a delay of the satellite backhaul link is relatively fixed.

In a possible implementation, as shown in FIG. 3, the dynamic satellite backhaul link is a satellite backhaul link implemented between the RAN and the UPF through a plurality of satellites. And there may be a plurality of dynamic satellite backhaul links available for selection between the UE and a core network.

In a possible implementation, the QoS monitoring policy is at least associated with QoS monitoring of a plurality of satellite backhaul links.

For example, the QoS monitoring policy is at least associated with QoS monitoring of all satellite backhaul links between the UE and a core network device.

The QoS monitoring policy being at least associated with the QoS monitoring of the satellite backhaul link may include that, the QoS monitoring policy at least indicates monitoring of one satellite backhaul link.

The QoS monitoring policy may indicate monitoring of a transmission characteristic of the satellite backhaul link, such as delay, etc., and indicate a reporting configuration of a QoS monitoring report.

In a possible implementation, the QoS monitoring policy may be sent by the SMF to the UPF, and the UPF may execute the QoS monitoring policy, for example, the UPF monitors the satellite backhaul link based on the QoS monitoring policy and reporting the QoS monitoring report.

In a possible implementation, the PCF may formulate the QoS monitoring policy. The QoS monitoring policy is used to indicate delay detection and reporting for the satellite backhaul link.

In a possible implementation, the delay of the satellite backhaul link includes: a delay between the RAN and the UPF. The delay between the RAN and the UPF may include at least one of: an uplink delay, a downlink delay, or a bidirectional delay.

In a possible implementation, the PCF may send the QoS monitoring policy to the SMF during a UE registration process and/or during a PDU session process, and the SMF notifies the UPF to start the QoS monitoring for the satellite backhaul link.

In this way, with sending, to the SMF by the PCF, the QoS monitoring policy associated with the QoS monitoring of the satellite backhaul link, monitoring the QoS of the satellite backhaul link can be implemented, which can then be taken as a basis for selecting the satellite backhaul link, and further improve control of the satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

The QoS parameter may include a QoS that the QoS monitoring policy requires to be monitored.

The monitoring indication may indicate that the QoS monitoring policy is used to monitor the satellite backhaul link in a form of explicit or implicit indication.

In a possible implementation, the QoS parameter included in the QoS monitoring policy indicates to detect the delay of the satellite backhaul link, that is, implicitly indicates that the QoS monitoring policy is used to monitor the satellite backhaul link.

In a possible implementation, the monitoring indication may explicitly indicate, through one or more bits carried by the QoS monitoring policy, that the QoS monitoring policy is used to monitor the satellite backhaul link.

The monitoring instruction may also be used to instruct the UPF to report the QoS monitoring report of the satellite backhaul link in a form of explicit or implicit indication.

In a possible implementation, the QoS monitoring policy may indicate: a reporting configuration (reporting condition) for reporting the QoS monitoring report.

In a possible implementation, the reporting configuration may include, but is not limited to, at least one of:
a reporting frequency;
a reporting period; or
an event that triggers the reporting.

In a possible implementation, the QoS monitoring policy may indicate: a reporting target of the QoS monitoring report, that is, a target to which the QoS monitoring report is sent.

In a possible implementation, the reporting target of the QoS monitoring report may include, but is not limited to, at least one of: an SMF; a PCF; an AF; or an NEF.

In a possible implementation, the delay of the satellite backhaul link includes: a delay of a GPRS tunnelling protocol for a user plane (GTP-U) between the UPF and the RAN.

In an embodiment, the delay of the satellite backhaul link includes: at least one delay in at least one direction between the UPF and the RAN. The UPF and the RAN establish the satellite backhaul link through at least one satellite.

In a possible implementation, the delay of the satellite backhaul link includes at least one of:
an uplink delay of the satellite backhaul link between the UPF and the RAN;
a downlink latency of the satellite backhaul link between the UPF and the RAN;
an uplink and downlink round-trip delay of the satellite backhaul link between the UPF and the RAN.

The satellite backhaul link between UPF and RAN may be the static satellite backhaul link (i. e., the satellite backhaul link includes one satellite), or the dynamic satellite backhaul link (i. e., the satellite backhaul link includes the plurality of satellites).

In an embodiment, formulating the QoS monitoring policy and sending the QoS monitoring policy to the SMF includes: formulating the QoS monitoring policy and sending the QoS monitoring policy to the SMF, in response to receiving, by the PCF, indication information that the UE communicates through the satellite backhaul link.

Here, the network side (an access network device and/or a core network device) may sense whether the UE communicates through the satellite backhaul link.

In a possible implementation, the AMF may sense whether the UE communicates via the satellite backhaul link. The AMF may send, to the PCF through the SMF, indication information indicating that the UE communicates through the satellite backhaul link.

In a possible implementation, the AMF may sense whether the UE communicates through the satellite backhaul link during a process of UE registration and/or during a process of UE performing PDU session, and when determining that the UE communicates through the satellite backhaul link, determination of whether the UE communicates through the satellite backhaul link may be implemented.

In a possible implementation, the SMF may send the received QoS monitoring report (indicating the delay of the satellite backhaul link) to the PCF, and the PCF updates the QoS monitoring policy based on the QoS monitoring report.

As shown in FIG. 5, an illustrative embodiment provides an information transmission method, which may be performed by a policy control function (PCF) and include the following step.

Step 501, a QoS monitoring report sent by the SMF is received. The QoS monitoring report is at least configured to indicate a delay of the satellite backhaul link.

After receiving the QoS monitoring policy, the SMF determines that it is necessary to start monitoring for the satellite backhaul link (such as performing delay detection) based on information included in the monitoring policy, and may send the QoS monitoring policy to the UFP.

In a possible implementation, the SMF may send a QoS monitoring notification to the UPF and carry the QoS monitoring policy in the QoS monitoring notification.

In a possible implementation, the SMF may send the QoS monitoring policy to a plurality of UPFs.

In a possible implementation, the SMF may send the QoS monitoring policy to the plurality of UPFs, and the plurality of UPFs may be different UPFs connected to the RAN via different satellite backhaul links.

The UPF may monitor the satellite backhaul link and monitor the corresponding QoS parameter based on the QoS monitoring policy. It may also send the QoS monitoring report to the sending target of the QoS monitoring report based on the reporting configuration.

In a possible implementation, the UPF may determine the uplink delay of the satellite backhaul link based on a sending time point of an uplink signal of the RAN and a receiving time point at which the UPF receives the uplink signal.

In a possible implementation, the UPF may determine the downlink delay of the satellite backhaul link based on a sending time point of a downlink signal of the UPF and a receiving time point at which the RAN receives the downlink signal.

In a possible implementation, the UPF may determine the uplink and downlink round-trip delay of the satellite backhaul link based at least on the uplink delay of the satellite backhaul link and the downlink delay of the satellite backhaul link.

In a possible implementation, in response to the UE performing the registration, the UPF may send the QoS monitoring report to the SMF.

In a possible implementation, during a PDU session process, the UPF may monitor the satellite backhaul link that performs PDU session interaction, and send the QoS monitoring report to the sending target of the QoS monitoring report.

In a possible implementation, the sending target of the QoS monitoring report may be indicated by a QoS monitoring policy.

The SMF may send the received QoS monitoring report (indicating the delay of the satellite backhaul link) to the PCF, and the PCF updates a QoS control policy based on the QoS monitoring report.

As shown in FIG. 6, an illustrative embodiment provides an information transmission method, which may be performed by a policy control function (PCF), and includes the following step.

Step 601: a QoS control policy and/or a charging policy are formulated or updated according to the delay of the satellite backhaul link.

For example, when the PCF updates the QoS control policy applied to a data flow using the satellite backhaul link based on the delay of the satellite backhaul link indicated in the QoS monitoring report, for example, updates a 5G quality of service identifier (5G QoS Identifier, 5QI) applied to the data flow.

For example, the PCF may formulate or update the charging policy based on the QoS monitoring report.

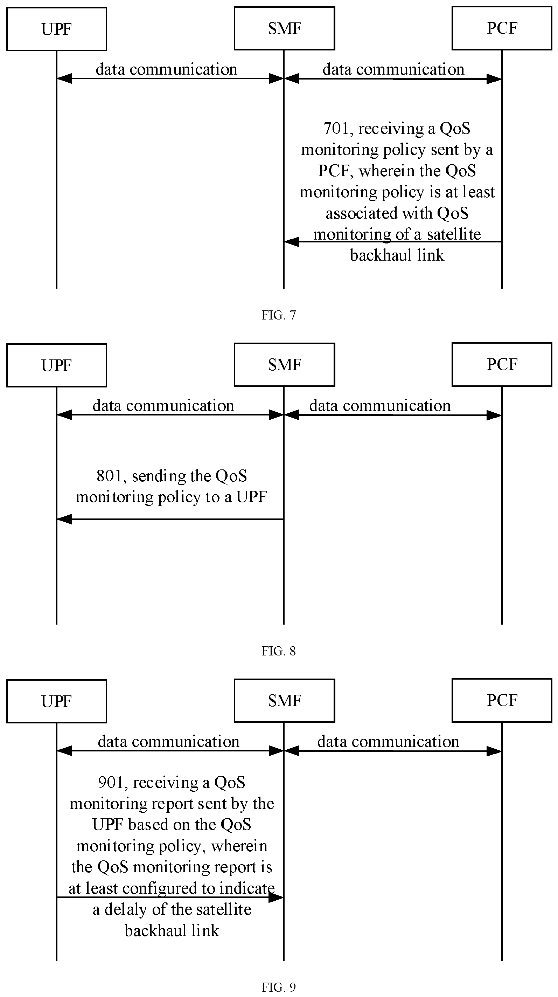

As shown in FIG. 7, an illustrative embodiment provides an information transmission method, which may be performed by a session management function (SMF), and includes the following step.

Step 701, a quality of service (QoS) monitoring policy sent by a policy control function (PCF) is received, in which, the QoS monitoring policy is at least associated with QoS monitoring of a satellite backhaul link.

The satellite backhaul link may include, but is not limited to, at least one of: a static satellite backhaul link; or a dynamic satellite backhaul link.

In a possible implementation, as shown in FIG. 2, the static satellite backhaul link is a satellite backhaul link implemented between an RAN and a UPF through a single satellite. When the satellite backhaul link is implemented by a single satellite, a delay of the satellite backhaul link is relatively fixed.

In a possible implementation, as shown in FIG. 3, the dynamic satellite backhaul link is a satellite backhaul link implemented between the RAN and the UPF through a plurality of satellites. And there may be a plurality of dynamic satellite backhaul links available for selection between the UE and a core network.

In a possible implementation, the QoS monitoring policy is at least associated with QoS monitoring of a plurality of satellite backhaul links.

For example, the QoS monitoring policy is at least associated with QoS monitoring of all satellite backhaul links between the UE and a core network device.

The QoS monitoring policy being at least associated with the QoS monitoring of the satellite backhaul link may include that, the QoS monitoring policy at least indicates monitoring of one satellite backhaul link.

The QoS monitoring policy may indicate monitoring of a transmission characteristic of the satellite backhaul link, such as delay, etc., and indicate a reporting configuration of a QoS monitoring report.

In a possible implementation, the QoS monitoring policy may be sent by the SMF to the UPF, and the UPF may execute the QoS monitoring policy, for example, the UPF monitors the satellite backhaul link based on the QoS monitoring policy and reporting the QoS monitoring report.

In a possible implementation, the PCF may formulate the QoS monitoring policy. The QoS monitoring policy is used to indicate delay detection and reporting for the satellite backhaul link.

In a possible implementation, the delay of the satellite backhaul link includes: a delay between the RAN and the UPF. The delay between the RAN and the UPF may include at least one of: an uplink delay, a downlink delay, or a bidirectional delay.

In a possible implementation, the PCF may send the QoS monitoring policy to the SMF during a UE registration process and/or during a PDU session process, and the SMF notifies the UPF to start the QoS monitoring for the satellite backhaul link.

In this way, with sending, to the SMF by the PCF, the QoS monitoring policy associated with the QoS monitoring of the satellite backhaul link, monitoring the QoS of the satellite backhaul link can be implemented, which can then be taken as a basis for selecting the satellite backhaul link and dynamically update the QoS control policy of a traffic using the backhaul link according to the delay of the satellite backhaul link, and further improve control of the satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

The QoS parameter may include a QoS that the QoS monitoring policy requires to be monitored.

The monitoring indication may indicate that the QoS monitoring policy is used to monitor the satellite backhaul link in a form of explicit or implicit indication.

In a possible implementation, the QoS parameter included in the QoS monitoring policy indicates to detect the delay of the satellite backhaul link, that is, implicitly indicates that the QoS monitoring policy is used to monitor the satellite backhaul link.

In a possible implementation, the monitoring indication may explicitly indicate, through one or more bits carried by the QoS monitoring policy, that the QoS monitoring policy is used to monitor the satellite backhaul link.

The monitoring instruction may also be used to instruct the UPF to report the QoS monitoring report of the satellite backhaul link in a form of explicit or implicit indication.

In a possible implementation, the QoS monitoring policy may indicate: a reporting configuration (reporting condition) for reporting the QoS monitoring report.

In a possible implementation, the reporting configuration may include, but is not limited to, at least one of:
a reporting frequency;
a reporting period; or
an event that triggers the reporting.

In a possible implementation, the QoS monitoring policy may indicate: a reporting target of the QoS monitoring report.

In a possible implementation, the reporting target of the QoS monitoring report may include, but is not limited to, at least one of: an SMF; a PCF; an AF; or an NEF.

In a possible implementation, the delay of the satellite backhaul link includes: a delay of a GPRS tunnelling protocol for a user plane (GTP-U) between the UPF and the RAN.

In an embodiment, the delay of the satellite backhaul link includes: at least one delay in at least one direction between the UPF and the RAN. The UPF and the RAN establish the satellite backhaul link through at least one satellite.

In a possible implementation, the delay of the satellite backhaul link includes at least one of:
an uplink delay of the satellite backhaul link between the UPF and the RAN;
a downlink latency of the satellite backhaul link between the UPF and the RAN;
an uplink and downlink round-trip delay of the satellite backhaul link between the UPF and the RAN.

The satellite backhaul link between UPF and RAN may be the static satellite backhaul link (i. e., the satellite backhaul link includes one satellite), or the dynamic satellite backhaul link (i. e., the satellite backhaul link includes the plurality of satellites).

In an embodiment, the QoS monitoring policy is formulated and sent by the PCF in response to determining that a user equipment (UE) communicates through the satellite backhaul link.

Here, the network side (an access network device and/or a core network device) may sense whether the UE communicates through the satellite backhaul link.

In a possible implementation, the AMF may sense whether the UE communicates via the satellite backhaul link. The AMF may send, to the PCF through the SMF, indication information indicating that the UE communicates through the satellite backhaul link.

In a possible implementation, the AMF may sense whether the UE communicates through the satellite backhaul link during a process of UE registration and/or during a process of UE performing PDU session, and when determining that the UE communicates through the satellite backhaul link, determination of whether the UE communicates through the satellite backhaul link may be implemented.

In a possible implementation, the SMF may send the received QoS monitoring report (indicating the delay of the satellite backhaul link) to the PCF, and the PCF updates the QoS control policy based on the QoS monitoring report.

As shown in FIG. 8, an illustrative embodiment provides an information transmission method, which may be performed by a session management function (SMF), and includes the following step.

Step 801, the QoS monitoring policy is sent to a UPF.

After receiving the QoS monitoring policy, the SMF determines that it is necessary to start monitoring for the satellite backhaul link (such as performing delay detection) based on information included in the monitoring policy, and may send the QoS monitoring policy to the UFP.

In a possible implementation, the SMF may send a QoS monitoring notification to the UPF and carry the QoS monitoring policy in the QoS monitoring notification.

In a possible implementation, the SMF may send the QoS monitoring policy to a plurality of UPFs.

In a possible implementation, the SMF may send the QoS monitoring policy to the plurality of UPFs, and the plurality of UPFs may be different UPFs connected to the RAN via different satellite backhaul links.

As shown in FIG. 9, an illustrative embodiment provides an information transmission method, which may be performed by a session management function (SMF), and includes the following step.

Step 901, a QoS monitoring report sent by the UPF is received based on the QoS monitoring policy, in which, the QoS monitoring report is at least configured to indicate a delay of the satellite backhaul link.

The UPF may monitor the satellite backhaul link and monitor the corresponding QoS parameter based on the QoS monitoring policy. It may also send the QoS monitoring report to the sending target of the QoS monitoring report based on the reporting configuration.

In a possible implementation, in response to the UE performing the registration, the UPF may send the QoS monitoring report to the SMF.

In a possible implementation, during a PDU session process, the UPF may monitor the satellite backhaul link that performs PDU session interaction, and send the QoS monitoring report to the sending target of the QoS monitoring report.

In a possible implementation, the sending target of the QoS monitoring report may be indicated by a QoS monitoring policy.

In a possible implementation, for example, in a case where the RAN and the UPF are time synchronized, then:
the UPF may determine the downlink delay of the satellite backhaul link based on a sending time point T1 of a downlink signal of the UPF and a receiving time point T2 at which the RAN receives the downlink signal;
the UPF may determine the uplink delay of the satellite backhaul link based on a sending time point T3 of an uplink signal of the RAN and a receiving time point T4 at which the UPF receives the uplink signal; or
the UPF may determine the uplink and downlink round-trip delay of the satellite backhaul link based at least on the uplink delay of the satellite backhaul link and the downlink delay of the satellite backhaul link.

In a possible implementation, for example, in a case where the RAN and the UPF are not time synchronized, then:
a sending time point at which the UPF sends a downlink signal of is T1, and a receiving time point at which the RAN receives the downlink signal is T2, a sending time point at which the RAN sends an uplink signal is T3 and a receiving time point at which the UPF receives the uplink signal is T4, thus, The UPF determines the uplink delay or the downlink delay of the satellite return link as (T2-T1+T4-T3)/2.

The UPF determines the uplink and downlink round-trip delay of the backhaul link as T2-T1+T4-T3.

In a possible implementation, the UPF, as a GTP-U sender, tests the uplink and downlink round-trip delay to the RAN (a GTP-U receiver) by sending an Echo message on a GTP-U path.

In an embodiment, receiving the QoS monitoring report sent by the UPF based on the QoS monitoring policy may include: receiving QoS monitoring reports respectively sent by a plurality of UPFs.

The method further includes: determining delays of satellite backhaul links corresponding to respective UPFs according to the QoS monitoring report; selecting a satellite backhaul link between a UPF and an RAN based on the delays of the satellite backhaul links corresponding to respective UPFs.

In a possible implementation, the QoS monitoring policy may indicate monitoring of the plurality of satellite backhaul links.

During a process of the UE performing registration, the SMF may send satellite backhaul links to UPFs associated with all satellite backhaul links. The RAN connects to the UPF through different satellite backhaul links. The plurality of UPFs may monitor and report delays of the corresponding satellite backhaul links, respectively. The SMF may select a satellite backhaul link (i.e., a selected UPF) that meets a predetermined condition for data communication (such as PDU session) between the UE and the core network based on the reported satellite backhaul link. The predetermined condition includes, but is not limited to, at least one of: the delay of the satellite backhaul link meeting a UE traffic requirement; the delay of the satellite backhaul link meeting a predetermined delay range; the delay of the satellite backhaul link meeting a transmission requirements of a UE type corresponding to the UE.

In a possible implementation, during the process of the UE performing the registration, the SMF may determine the satellite backhaul link (i.e., the selected UPF) used for data communication between the UE and the core network based on the QoS monitoring reports sent by plurality of UPFs respectively, and the selected UPF performs the QoS monitoring of the satellite backhaul link for the data communication between the UE and the core network based on the QoS monitoring policy.

In a possible implementation, the SMF may send the received QoS monitoring report (indicating the delay of the satellite backhaul link) to the PCF, and the PCF updates a QoS control policy based on the QoS monitoring report.

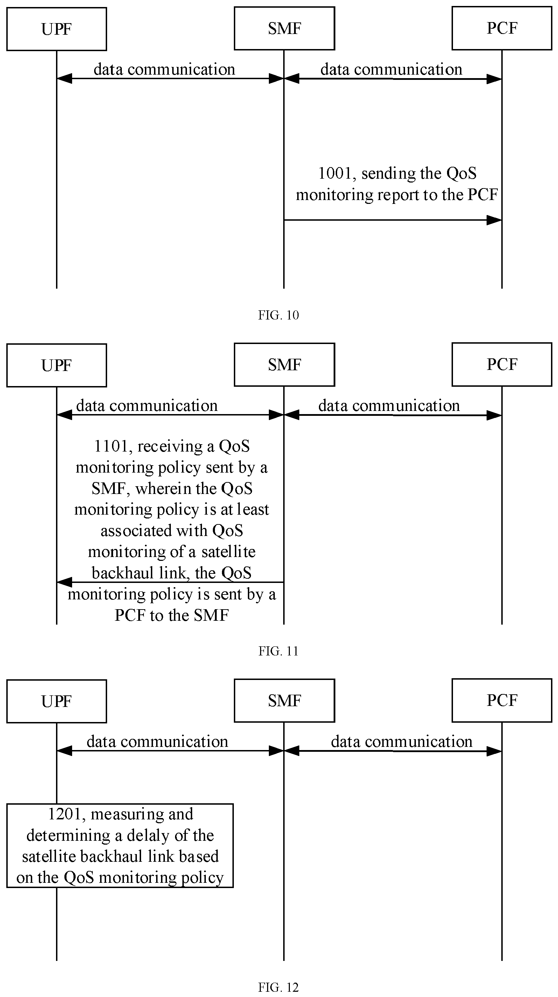

As shown in FIG. 10, an illustrative embodiment provides an information transmission method, which may be performed by a session management function (SMF), and include the following step.

Step 1001, the QoS monitoring report is sent to the PCF.

In a possible implementation, the sending target of the QoS monitoring report may be indicated by the QoS monitoring policy.

The SMF may send the received QoS monitoring report (indicating the delay of the satellite backhaul link) to the PCF, and the PCF updates a QoS control policy based on the QoS monitoring report.

For example, the PCF may formulate or update the charging policy based on the QoS monitoring report.

As shown in FIG. 11, an illustrative embodiment provides an information transmission method, which may be performed by a user plane function (UPF), and includes the following step.

Step 1101, a quality of service (QoS) monitoring policy sent by a session management function (SMF) is received. The QoS monitoring policy is at least associated with QoS monitoring of a satellite backhaul link, and the QoS monitoring policy is sent by a policy control function (PCF) to the SMF.

The satellite backhaul link may include, but is not limited to, at least one of: a static satellite backhaul link; or a dynamic satellite backhaul link.

In a possible implementation, as shown in FIG. 2, the static satellite backhaul link is a satellite backhaul link implemented between an RAN and a UPF through a single satellite. When the satellite backhaul link is implemented by a single satellite, a delay of the satellite backhaul link is relatively fixed.

In a possible implementation, as shown in FIG. 3, the dynamic satellite backhaul link is a satellite backhaul link implemented between the RAN and the UPF through a plurality of satellites. And there may be a plurality of dynamic satellite backhaul links available for selection between the UE and a core network.

In a possible implementation, the QoS monitoring policy is at least associated with QoS monitoring of a plurality of satellite backhaul links.

For example, the QoS monitoring policy is at least associated with QoS monitoring of all satellite backhaul links between the UE and a core network device.

The QoS monitoring policy being at least associated with the QoS monitoring of the satellite backhaul link may include that, the QoS monitoring policy at least indicates monitoring of one satellite backhaul link.

The QoS monitoring policy may indicate monitoring of a transmission characteristic of the satellite backhaul link, such as delay, etc., and indicate a reporting configuration of a QoS monitoring report.

In a possible implementation, the QoS monitoring policy may be sent by the SMF to the UPF, and the UPF may execute the QoS monitoring policy, for example, the UPF monitors the satellite backhaul link based on the QoS monitoring policy and reporting the QoS monitoring report.

In a possible implementation, the PCF may formulate the QoS monitoring policy. The QoS monitoring policy is used to indicate delay detection and reporting for the satellite backhaul link.

In a possible implementation, the delay of the satellite backhaul link includes: a delay between the RAN and the UPF. The delay between the RAN and the UPF may include at least one of: an uplink delay, a downlink delay, or a bidirectional delay.

In a possible implementation, the PCF may send the QoS monitoring policy to the SMF during a UE registration process and/or during a PDU session process, and the SMF notifies the UPF to start the QoS monitoring for the satellite backhaul link.

In this way, with sending, to the SMF by the PCF, the QoS monitoring policy associated with the QoS monitoring of the satellite backhaul link, monitoring the QoS of the satellite backhaul link can be implemented, which can then be taken as a basis for selecting the satellite backhaul link, and further improve control of the satellite backhaul link.

After receiving the QoS monitoring policy, the SMF determines that it is necessary to start monitoring for the satellite backhaul link (such as performing delay detection) based on information included in the monitoring policy, and may send the QoS monitoring policy to the UFP.

In a possible implementation, the SMF may send a QoS monitoring notification to the UPF and carry the QoS monitoring policy in the QoS monitoring notification.

In a possible implementation, the SMF may send the QoS monitoring policy to a plurality of UPFs.

In a possible implementation, the SMF may send the QoS monitoring policy to the plurality of UPFs, and the plurality of UPFs may be different UPFs connected to the RAN via different satellite backhaul links.

In this way, with sending, to the SMF by the PCF, the QoS monitoring policy associated with the QoS monitoring of the satellite backhaul link, monitoring the QoS of the satellite backhaul link can be implemented, which can then be taken as a basis for selecting the satellite backhaul link and dynamically update the QoS control policy of a traffic using the backhaul link according to the delay of the satellite backhaul link, and further improve control of the satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

The QoS parameter may include a QoS that the QoS monitoring policy requires to be monitored.

The monitoring indication may indicate that the QoS monitoring policy is used to monitor the satellite backhaul link in a form of explicit or implicit indication.

In a possible implementation, the QoS parameter included in the QoS monitoring policy indicates to detect the delay of the satellite backhaul link, that is, implicitly indicates that the QoS monitoring policy is used to monitor the satellite backhaul link.

In a possible implementation, the monitoring indication may explicitly indicate, through one or more bits carried by the QoS monitoring policy, that the QoS monitoring policy is used to monitor the satellite backhaul link.

The monitoring instruction may also be used to instruct the UPF to report the QoS monitoring report of the satellite backhaul link in a form of explicit or implicit indication.

In a possible implementation, the QoS monitoring policy may indicate: a reporting configuration (reporting condition) for reporting the QoS monitoring report.

In a possible implementation, the reporting configuration may include, but is not limited to, at least one of:
a reporting frequency;
a reporting period; or
an event that triggers the reporting.

In a possible implementation, the QoS monitoring policy may indicate: a reporting target of the QoS monitoring report.

In a possible implementation, the reporting target of the QoS monitoring report may include, but is not limited to, at least one of: an SMF; a PCF; an AF; or an NEF.

In a possible implementation, the delay of the satellite backhaul link includes: a delay of a GPRS tunnelling protocol for a user plane (GTP-U) between the UPF and the RAN.

In an embodiment, the delay of the satellite backhaul link includes: at least one delay in at least one direction between the UPF and the RAN. The UPF and the RAN establish the satellite backhaul link through at least one satellite.

In a possible implementation, the delay of the satellite backhaul link includes at least one of:
an uplink delay of the satellite backhaul link between the UPF and the RAN;
a downlink latency of the satellite backhaul link between the UPF and the RAN;
an uplink and downlink round-trip delay of the satellite backhaul link between the UPF and the RAN.

The satellite backhaul link between UPF and RAN may be the static satellite backhaul link (i. e., the satellite backhaul link includes one satellite), or the dynamic satellite backhaul link (i. e., the satellite backhaul link includes the plurality of satellites).

In an embodiment, the QoS monitoring policy is formulated and sent by the PCF to the SMF in response to determining that a user equipment (UE) communicates through the satellite backhaul link.

Here, the network side (an access network device and/or a core network device) may sense whether the UE communicates through the satellite backhaul link.

In a possible implementation, the AMF may sense whether the UE communicates via the satellite backhaul link. The AMF may send, to the PCF through the SMF, indication information indicating that the UE communicates through the satellite backhaul link.

In a possible implementation, the AMF may sense whether the UE communicates through the satellite backhaul link during a process of UE registration and/or during a process of UE performing PDU session, and when determining that the UE communicates through the satellite backhaul link, determination of whether the UE communicates through the satellite backhaul link may be implemented.

In a possible implementation, the SMF may send the received QoS monitoring report (indicating the delay of the satellite backhaul link) to the PCF, and the PCF updates the QoS control policy based on the QoS monitoring report.

As shown in FIG. 12, an illustrative embodiment provides an information transmission method, which may be performed by a user plane function (UPF), and includes the following step.

Step 1201, a delay of the satellite backhaul link is measured and determined based on the QoS monitoring policy.

The UPF may monitor the satellite backhaul link and monitor the corresponding QoS parameter based on the QoS monitoring policy.

In a possible implementation, for example, in a case where the RAN and the UPF are time synchronized, then:
the UPF may determine the downlink delay of the satellite backhaul link based on a sending time point T1 of a downlink signal of the UPF and a receiving time point T2 at which the RAN receives the downlink signal;
the UPF may determine the uplink delay of the satellite backhaul link based on a sending time point T3 of an uplink signal of the RAN and a receiving time point T4 at which the UPF receives the uplink signal; or
the UPF may determine the uplink and downlink round-trip delay of the satellite backhaul link based at least on the uplink delay of the satellite backhaul link and the downlink delay of the satellite backhaul link.

In a possible implementation, for example, in a case where the RAN and the UPF are not time synchronized, then:
a sending time point at which the UPF sends a downlink signal of is T1, and a receiving time point at which the RAN receives the downlink signal is T2, a sending time point at which the RAN sends an uplink signal is T3 and a receiving time point at which the UPF receives the uplink signal is T4, thus, The UPF determines the uplink delay or the downlink delay of the satellite return link as (T2-T1+T4-T3)/2.

The UPF determines the uplink and downlink round-trip delay of the backhaul link as T2-T1+T4-T3.

In a possible implementation, the UPF, as a GTP-U sender, tests the uplink and downlink round-trip delay to the RAN (a GTP-U receiver) by sending an Echo message on a GTP-U path.

In a possible implementation, the method further includes at least one of: sending a QoS monitoring report to the SMF; or sending the QoS monitoring report to a sending object indicated by the QoS monitoring policy. The QoS monitoring report is at least configured to indicate the delay of the satellite backhaul link.

In a possible implementation, in response to the UE performing the registration, the UPF may send the QoS monitoring report to the SMF.

In a possible implementation, during a PDU session process, the UPF may monitor the satellite backhaul link that performs PDU session interaction, and send the QoS monitoring report to the sending target of the QoS monitoring report.

In a possible implementation, the sending target of the QoS monitoring report may be indicated by a QoS monitoring policy.

In a possible implementation, the QoS monitoring policy may indicate monitoring of the plurality of satellite backhaul links.

During a process of the UE performing registration, the SMF may send satellite backhaul links to UPFs associated with all satellite backhaul links. The RAN connects to the UPF through different satellite backhaul links. The plurality of UPFs may monitor and report delays of the corresponding satellite backhaul links, respectively. The SMF may select a satellite backhaul link (i.e., a selected UPF) that meets a predetermined condition for data communication (such as PDU session) between the UE and the core network based on the reported satellite backhaul link. The predetermined condition includes, but is not limited to, at least one of: the delay of the satellite backhaul link meeting a UE traffic requirement; the delay of the satellite backhaul link meeting a predetermined delay range; the delay of the satellite backhaul link meeting a transmission requirements of a UE type corresponding to the UE.

In a possible implementation, during the process of the UE performing the registration, the SMF may determine the satellite backhaul link (i.e., the selected UPF) used for data communication between the UE and the core network based on the QoS monitoring reports sent by plurality of UPFs respectively, and the selected UPF performs the QoS monitoring of the satellite backhaul link for the data communication between the UE and the core network based on the QoS monitoring policy.

The embodiments of the present disclosure provide the information transmission method performed by the PCF, the information transmission method performed by the SMF, and the information transmission method performed by the UPF. It should be noted that the embodiment on the PCF side, the embodiment on the SMF side, and the embodiment on the UPF side are corresponding with each other. Therefore, the same explanations or features will not be repeated one by one, and the embodiments on each side can refer to each other.

A specific example is provided below in combination with any of the above embodiments.

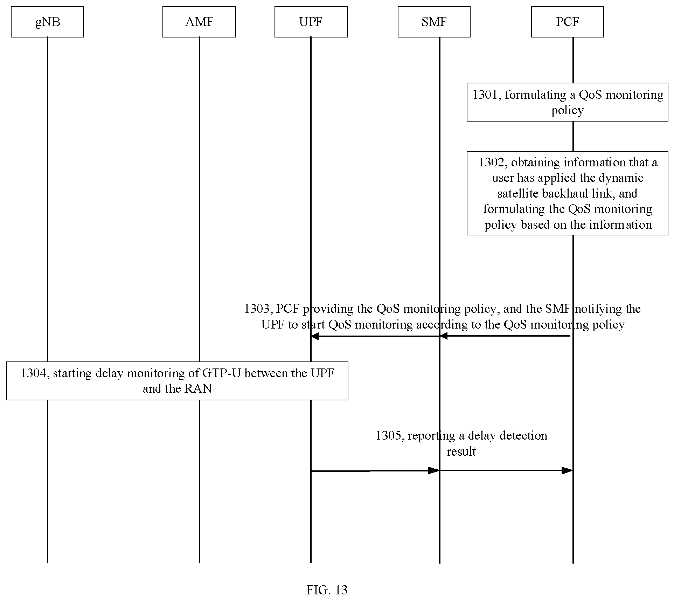

The present disclosure proposes a QoS monitoring method for a starlink backhaul link to realize delay detection and acquisition for the starlink backhaul link. As shown in FIG. 13, the method includes the following specific steps.

Step 1301: The PCF formulates a QoS monitoring policy. The QoS monitoring policy is applied to delay detection and reporting for a satellite backhaul link, including a static satellite backhaul link and/or a dynamic satellite backhaul link. The QoS monitoring policy at least includes a QoS parameter and monitoring indication information.

The QoS parameter indicates a QoS parameter to be detected, such as an uplink delay, a downlink delay, or a bidirectional delay of the backhaul link.

The monitoring indication information is used to indicate that the QoS monitoring is applied to the satellite backhaul link, or to indicate reporting a delay detection result between a UPF and an RAN

Step 1302: The PCF obtains information that a user has applied the dynamic satellite backhaul link, and formulates the QoS monitoring policy based on the information.

Step 1303: The PCF provides the QoS monitoring policy. The QoS monitoring policy is provided by the PCF to an SMF, and the SMF notifies the UPF to start QoS monitoring according to the QoS monitoring policy.

Step 1304: the UPF receives a QoS monitoring notification and starts delay monitoring of GTP-U between the UPF and the RAN according to the indication information in the monitoring policy.

Step 1305: UPF performs delay detection on the satellite backhaul link and reports a delay detection result (QoS monitoring report) to the target.

The target may include the SMF, the PCF, an AF, or an NEF, etc.

A reporting condition may be indicated in the QoS monitoring policy, such as periodic reporting, reporting upon meeting a threshold, etc.

The QoS monitoring policy may be notified to the SMF during a UE registration process, or during a PDU session process (including PDU session creation, PDU session modification), and the SMF notifies the UPF to start the QoS monitoring for the satellite backhaul link.

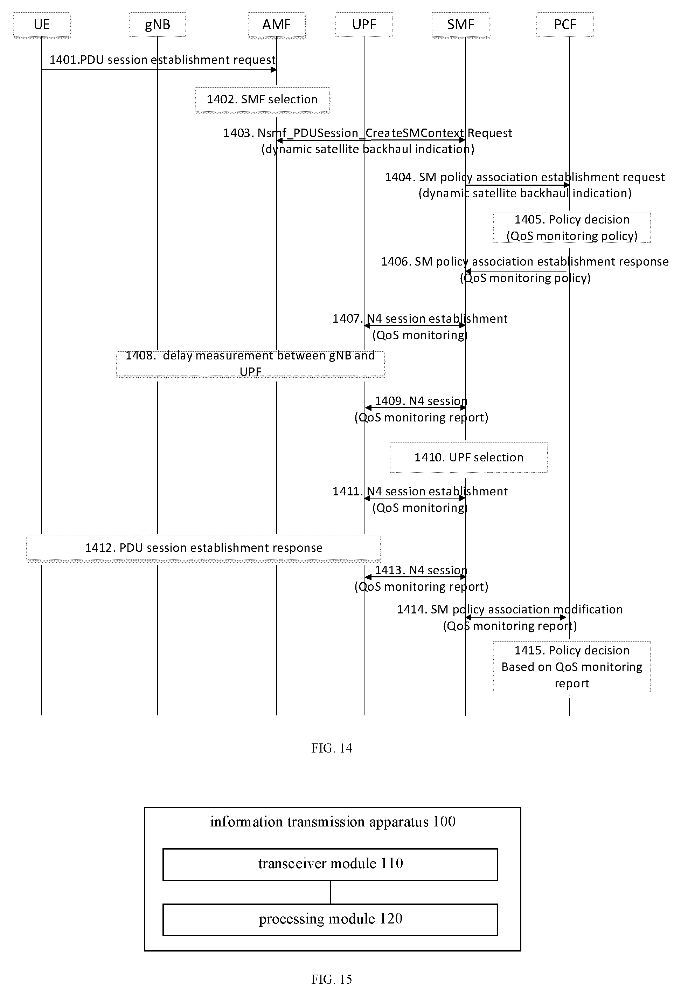

As shown in FIG. 14, the method includes the following specific steps.

Step 1401, After completing access registration, a UE initiates a PDU session establishment request.

Step 1402, an AMF receives the PDU session establishment request initiated by the UE and performs SMF selection.

Step 1403, The AMF senses that the UE uses a dynamic satellite backhaul link, and a PDU session context creation request initiated to the SMF includes a dynamic satellite backhaul indication, indicating that the UE uses the dynamic satellite backhaul link.

Step 1404, A policy session is established between the SMF and the PCF, and a policy session establishment request includes a dynamic satellite backhaul link information indication.

Step 1405, The PCF formulates a policy for PDU session establishment, formulates a QoS monitoring policy based on the dynamic satellite backhaul link information, to request detection of the delay of the dynamic satellite backhaul link, and request reporting of the delay of the dynamic satellite backhaul link.

Step 1406, The PCF sends a policy to the SMF, in which, the policy includes the QoS monitoring policy. The QoS monitoring policy at least includes a QoS parameter, a satellite backhaul link indication/an indication for detecting the delay between the RAN and the UPF).

Step 1407, The SMF receives the QoS monitoring policy and needs to start delay detection for the satellite backhaul link according to the indication information included in the monitoring policy. The SMF sends QoS monitoring indications to all UPFs related to satellite backhaul and requires the UPFs to report delay detection results.

Step 1408: The UPF initiates the delay detection with the RAN (gNB).

Step 1409: The UPF reports the delay detection results (QoS monitoring reports) to the SMF.

Step 1410: A suitable UPF is selected according to the delay detection results reported by respective UPFs.

Step 1411: An N4 session is established between the SMF and the UPF, and the SMF notifies the UPF to continue to perform the QoS monitoring.

Step 1412: The remaining PDU session establishment process is completed between the UE and the network.

Step 1413: the UPF starts QoS monitoring for the satellite backhaul link, and reports a delay detection result of the satellite backhaul link to the SMF when a reporting condition indicated in the monitoring policy are met.

Step 1414: The SMF reports the delay detection result to the PCF.

Step 1415: The PCF adjusts a QoS policy according to the reported delay detection result.

When the UPF detects the delay of the satellite backhaul link, the UPF may also report the delay detection result to an AF, so that the AF may decide whether to continue providing a traffic based on the delay.

As shown in FIG. 15, an illustrative embodiment provides an information transmission apparatus 100, which may be provided in a PCF, and includes a transceiver module 110.

The transceiver module 110 is configured to formulate a quality of service (QoS) monitoring policy and send the QoS monitoring policy to a session management function (SMF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, the transceiver module 110 is specifically configured to: formulate the QoS monitoring policy and send the QoS monitoring policy to the SMF, in response to receiving, by the PCF, indication information that a user equipment (UE) communicates through the satellite backhaul link.

In an embodiment, the transceiver module 110 is further configured to: receive a QoS monitoring report sent by the SMF, in which, the QoS monitoring report is at least configured to indicate a delay of the satellite backhaul link.

In an embodiment, the apparatus further includes: a processing module 120, configured to formulate or update a QoS control policy and/or a charging policy according to the delay of the satellite backhaul link.

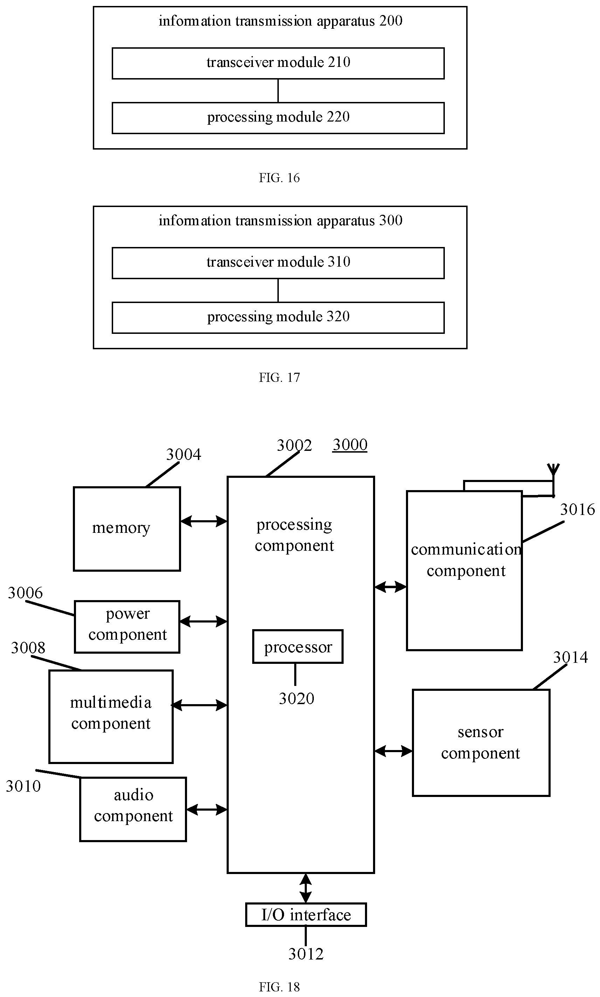

As shown in FIG. 16, an illustrative embodiment provides an information transmission apparatus 200, which may be provided in an SMF, and includes a transceiver module 210.

The transceiver module 210 is configured to receive a quality of service (QoS) monitoring policy sent by a policy control function (PCF), in which, the QoS monitoring policy is at least associated with QoS monitoring of a satellite backhaul link.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between a user plane function (UPF) and a radio access network (RAN), in which, the UPF and the RAN establish the satellite backhaul link through at least one satellite.

In an embodiment, the QoS monitoring policy is formulated and sent by the PCF in response to determining that a user equipment (UE) communicates through the satellite backhaul link.

In an embodiment, the transceiver module 210 is further configured to: send the QoS monitoring policy to a UPF.

In an embodiment, the transceiver module 210 is further configured to: receive a QoS monitoring report sent by the UPF based on the QoS monitoring policy, in which, the QoS monitoring report is at least configured to indicate a delay of the satellite backhaul link.

In an embodiment, the transceiver module 210 is specifically configured to: receive QoS monitoring reports respectively sent by a plurality of UPFs; in which, the apparatus further includes: a processing module 220, configured to determine delays of satellite backhaul links corresponding to respective UPFs according to the QoS monitoring report; further configured to select a satellite backhaul link between a UPF and an RAN based on the delays of the satellite backhaul links corresponding to respective UPFs.

In an embodiment, the transceiver module 210 is further configured to: send the QoS monitoring report to the PCF.

As shown in FIG. 17, an illustrative embodiment provides an information transmission apparatus 300, which may be provided in an UPF, and includes a transceiver module 310.

The transceiver module 310 is configured to receive a quality of service (QoS) monitoring policy sent by a session management function (SMF), in which, the QoS monitoring policy is at least associated with QoS monitoring of a satellite backhaul link, the QoS monitoring policy is sent by a policy control function (PCF) to the SMF.

In an embodiment, the QoS monitoring policy includes at least one of: a QoS parameter, configured to indicate to measure a delay of the satellite backhaul link; or a monitoring indication, configured to indicate that the QoS monitoring policy is at least associated with the satellite backhaul link, and/or to report the delay of the satellite backhaul link.

In an embodiment, the delay of the satellite backhaul link includes: at least one delay in at least one direction between the UPF and a radio access network (RAN), in which, the UPF and the RAN establish the satellite backhaul link through at least one satellite.

In an embodiment, the QoS monitoring policy is formulated and sent by the PCF to the SMF in response to determining that a user equipment (UE) communicates through the satellite backhaul link.

In an embodiment, the apparatus further includes: a processing module 320, configured to measure and determine a delay of the satellite backhaul link based on the QoS monitoring policy.

In an embodiment, the transceiver module 310 is further configured to perform at least one of: sending a QoS monitoring report to the SMF; or sending the QoS monitoring report to a sending object indicated by the QoS monitoring policy; in which, the QoS monitoring report is at least configured to indicate the delay of the satellite backhaul link.

An embodiment of the present disclosure provides a communication device, including: a processor; and a memory configured to store instructions executable by the processor, in which, the processor is configured to: implement the information transmission method according to any embodiment of the present disclosure when executing the executable instructions.

In an embodiment, the communication device may include, but is not limited to, at least one of: a UE or a network device. Here, the network device may include a core network device or an access network device, etc. Here, the access network device may include a base station, the core network may include an AMF and an SMF.

The processor may include various types of storage media, which are non-temporary computer storage media that can continue to memorize information stored thereon after a user equipment loses power.

The processor may be connected to the memory via a bus or the like, and may be used to read an executable program stored in the memory, for example, at least one of the methods shown in FIGs. 4 to 14.

An embodiment of the present disclosure also provides a computer storage medium storing a computer executable program. When the executable program is executed by a processor, the information transmission method according to any embodiment of the present disclosure is implemented.

Regarding the device or storage medium in the above embodiment, a specific implementation in which each module performs an operation has been described in detail in the embodiment of the method, and will not be repeated herein.

An embodiment of the present disclosure also provides a communication method. The method is performed by a core network device, and includes: in response to receiving indication information that a user equipment (UE) communicates through a satellite backhaul link, formulating or updating a quality of service (QoS) control policy and/or a charging policy; measuring and determining a delay of the satellite backhaul link based on a QoS monitoring policy.

The communication method in the above embodiments may also include the information transmission method in any embodiment of the present disclosure, for example, at least one of the methods shown in FIGs. 4 to 14.

Regarding the communication method in the above embodiment, a specific implementation has been described in detail in the embodiment of the above method, and will not be repeated herein.

An embodiment of the present disclosure also provides a communication method. The method is performed by a core network device. The core network device includes a policy control function (PCF), a session management function (SMF) and a user plane function (UPF).

The method includes: formulating, by the PCF, a quality of service (QoS) monitoring policy and sending, by the PCF, the QoS monitoring policy to the SMF, in which, the QoS monitoring policy is at least associated with QoS monitoring of a satellite backhaul link; sending, by the SMF, the QoS monitoring policy to the UPF; measuring and determining, by the UPF, a delay of the satellite backhaul link based on the QoS monitoring policy; sending, by the UPF, a QoS monitoring report to the SMF, in which, the QoS monitoring report is at least configured to indicate the delay of the satellite backhaul link; sending, by the SMF, the QoS monitoring report to the PCF.

The communication method in the above embodiments may also include the information transmission method in any embodiment of the present disclosure, for example, at least one of the methods shown in FIGs. 3 to 14.

An embodiment of the present disclosure also provides a communication system. The communication system includes a policy control function (PCF), a session management function (SMF) and a user plane function (UPF), where the PCF is configured to implement the method according to any embodiment of the present disclosure, the SMF is configured to implement the method according to any embodiment of the present disclosure, and the UPF is configured to implement the method according to any embodiment of the present disclosure.

Regarding the communication system in the above embodiment, a specific implementation in which each component performs an operation has been described in detail in the embodiment of the method, and will not be repeated herein.

The communication method in the above embodiments may also include the information transmission method in any embodiment of the present disclosure, for example, at least one of the methods shown in FIGs. 3 to 14.

An embodiment of the present disclosure provides a communication system, configured to perform the method according to the tenth aspect.

Regarding the communication system in the above embodiment, a specific implementation that performs an operation has been described in detail in the embodiment of the method, and will not be repeated herein.

FIG. 18 is a block diagram of a UE 3000 according to an illustrative embodiment. For example, the UE 3000 may be a mobile phone, a computer, a digital broadcast UE, a messaging device, a game console, a tablet device, a medical device, a fitness device, a personal digital assistant, etc.

Referring to FIG. 18, the UE 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 generally controls overall operations of the UE 3000, such as operations associated with a display, a phone call, a data communication, a camera operation, and a recording operation. The processing component 3002 may include one or more processors 3020 to execute instructions to complete all or part of steps of the above-mentioned method. In addition, the processing component 3002 may include one or more modules to facilitate an interaction between the processing component 3002 and other components. For example, the processing component 3002 may include a multimedia module to facilitate an interaction between the multimedia component 3008 and the processing component 3002.

The memory 3004 is configured to store various types of data to support operations on the UE 3000. Examples of such data include instructions for any application or method operating on the UE 3000, contact data, phone book data, message, picture, video, etc. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 3006 provides power to various components of the UE 3000. The power component 3006 may include a power management system, one or more power supplies, and other components associated with generating, managing, and distributing power of the UE 3000.

The multimedia component 3008 includes a screen that provides an output interface between the UE 3000 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense a touch, a slide, and a gesture on the touch panel. The touch sensor can not only sense the boundary of the touch or slide operation, but also detect a duration and a pressure associated with the touch or slide operation. In some embodiments, the multimedia component 3008 includes a front camera and/or a rear camera. When the UE 3000 is in an operating mode, such as a shooting mode or a video mode, the front camera and/or the rear camera may receive external multimedia data. Each of the front camera and the rear camera may have a fixed optical lens system or have a focal length and optical zoom capability.

The audio component 3010 is configured to output and/or input audio signals. For example, the audio component 3010 includes a microphone (MIC), and when the UE 3000 is in an operation mode, such as a call mode, a recording mode, and a speech recognition mode, the microphone is configured to receive an external audio signal. The received audio signal may be further stored in the memory 3004 or transmitted via the communication component 3016. In some embodiments, the audio component 3010 also includes a speaker, configure to output audio signals.

The I/O interface 3012 provides an interface between the processing component 3002 and peripheral interface modules, such as a keyboard, a click wheel, buttons, etc. The buttons may include, but not limited to, a home button, a volume button, a start button, and a lock button.

The sensor assembly 3014 includes one or more sensors for providing various aspects of status assessment for the UE 3000. For example, the sensor assembly 3014 may detect a turned-on/turned-off state of the device 3000, and may achieve relative positioning of the components, for example, a display and a keypad of the UE 3000. The sensor assembly 3014 may also detect a location change of the UE 3000 or a component of the UE 3000, presence or absence of a contact between the user and the UE 3000, orientation or acceleration/deceleration of the UE 3000, and a temperature change of the UE 3000. The sensor assembly 3014 may include a proximity sensor configured to detect the presence of a nearby object without any physical contact. The sensor assembly 3014 may also include a light sensor, such as a CMOS or CCD image sensor, for use in imaging applications. In some embodiments, the sensor assembly 3014 may also include an acceleration sensor, a gyroscope sensor, a magnetic sensor, a pressure sensor, or a temperature sensor.

The communication component 3016 is configured to facilitate wired or wireless communication between the UE 3000 and other devices. The UE 3000 may access a wireless network based on a communication standard, such as Wi-Fi, 4G or 5G, or a combination thereof. In an illustrative embodiment, the communication component 3016 receives a broadcast signal or broadcast-related information from an external broadcast management system via a broadcast channel. In an illustrative embodiment, the communication component 816 also includes a near field communication (NFC) module to facilitate short-range communication. For example, the NFC module may be implemented based on radio frequency identifier (RFID) technology, infrared data association (IrDA) technology, ultra-wideband (UWB) technology, Bluetooth (BT) technology and other technologies.

In an illustrative embodiment, the UE 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 3004 including the instructions, and the instructions may be executed by the processor 3020 of the UE 3000 to complete the above methods. For example, the non-transitory computer-readable storage medium may be a ROM, a random access memory (RAM), a CD-ROM, a magnetic tape, a floppy disk, an optical data storage device, etc.

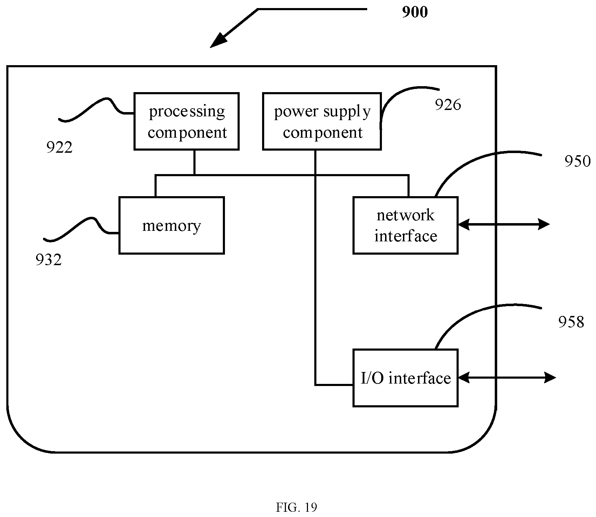

As shown in FIG. 19, an embodiment of the present disclosure shows a structure of a base station. For example, the base station 900 may be provided as a network device. Referring to FIG. 19, the base station 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned methods applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS X TM, Unix TM, Linux TM, FreeBSD TM or the like.

After referring to the specification and practicing the invention disclosed herein, those skilled in the art will readily appreciate other embodiments of the present disclosure. The present disclosure is intended to cover any variations, uses or adaptations of the present disclosure, and the variations, uses or adaptations follow a general principle of the present disclosure and include common knowledge or customary techniques in the art that are not disclosed in the present disclosure. The specification and the embodiments are to be considered illustrative only, and the true scope and spirit of the present disclosure are indicated by the following claims.

It is appreciated that the present disclosure is not limited to the exact construction that has been described above and shown in the drawings and that various modifications and changes can be made without departing from the scope thereof. The scope of the present disclosure is limited only by the appended claims.

## Claims

1. An information transmission method, performed by a policy control function (PCF), comprising:
formulating a quality of service (QoS) monitoring policy and sending the QoS monitoring policy to a session management function (SMF), wherein the QoS monitoring policy is at least associated with QoS monitoring of a satellite backhaul link.

2. The method according to claim 1, wherein the QoS monitoring policy comprises at least one of:
a QoS parameter, configured to indicate to measure a delay of the satellite backhaul link; or
a monitoring indication, configured to indicate that the QoS monitoring policy is at least associated with the satellite backhaul link, and/or to report the delay of the satellite backhaul link.

3. The method according to claim 1, wherein the delaly of the satellite backhaul link comprises:
at least one delaly in at least one direction between a user plane function (UPF) and a radio access network (RAN), wherein the UPF and the RAN establish the satellite backhaul link through at least one satellite.

4. The method according to any one of claims 1 to 3, wherein formulating the QoS monitoring policy and sending the QoS monitoring policy to the SMF comprises:
formulating the QoS monitoring policy and sending the QoS monitoring policy to the SMF, in response to receiving, by the PCF, indication information that a user equipment (UE) communicates through the satellite backhaul link.

5. The method according to claim 4, further comprising:
receiving a QoS monitoring report sent by the SMF, wherein the QoS monitoring report is at least configured to indicate a delaly of the satellite backhaul link.

6. The method according to claim 5, further comprising:
formulating or updating a QoS control policy and/or a charging policy according to the delaly of the satellite backhaul link.

7. An information transmission method, performed by a session management function (SMF), comprising:
receiving a quality of service (QoS) monitoring policy sent by a policy control function (PCF), wherein the QoS monitoring policy is at least associated with QoS monitoring of a satellite backhaul link.

8. The method according to claim 7, wherein the QoS monitoring policy comprises at least one of:
a QoS parameter, configured to indicate to measure a delaly of the satellite backhaul link, or
a monitoring indication, configured to indicate that the QoS monitoring policy is at least associated with the satellite backhaul link, and/or to report the delaly of the satellite backhaul link.

9. The method according to claim 7, wherein the delaly of the satellite backhaul link comprises:
at least one delaly in at least one direction between a user plane function (UPF) and a radio access network (RAN), wherein the UPF and the RAN establish the satellite backhaul link through at least one satellite.

10. The method according to claim 7, wherein the QoS monitoring policy is formulated and sent by the PCF in response to determining that a user equipment (UE) communicates through the satellite backhaul link.

11. The method according to any one of claims 7 to 10, further comprising:
sending the QoS monitoring policy to a UPF.

12. The method according to claim 11, further comprising:
receiving a QoS monitoring report sent by the UPF based on the QoS monitoring policy, wherein the QoS monitoring report is at least configured to indicate a delaly of the satellite backhaul link.

13. The method according to claim 12, wherein receiving the QoS monitoring report sent by the UPF based on the QoS monitoring policy comprises:
receiving QoS monitoring reports respectively sent by a plurality of UPFs;
wherein the method further comprises:
determining delalys of satellite backhaul links corresponding to respective UPFs according to the QoS monitoring report,
selecting a satellite backhaul link between a UPF and an RAN based on the delalys of the satellite backhaul links corresponding to respective UPFs.

14. The method according to claim 12, further comprising: sending the QoS monitoring report to the PCF.

15. An information transmission method, performed by a user plane function (UPF), comprising:
receiving a quality of service (QoS) monitoring policy sent by a session management function (SMF), wherein the QoS monitoring policy is at least associated with QoS monitoring of a satellite backhaul link, the QoS monitoring policy is sent by a policy control function (PCF) to the SMF.

16. The method according to claim 15, wherein the QoS monitoring policy comprises at least one of:
a QoS parameter, configured to indicate to measure a delay of the satellite backhaul link; or
a monitoring indication, configured to indicate that the QoS monitoring policy is at least associated with the satellite backhaul link, and/or to report the delay of the satellite backhaul link.

17. The method according to claim 15, wherein the delay of the satellite backhaul link comprises:
at least one delay in at least one direction between the UPF and a radio access network (RAN), wherein the UPF and the RAN establish the satellite backhaul link through at least one satellite.

18. The method according to claim 15, wherein the QoS monitoring policy is formulated and sent by the PCF to the SMF in response to determining that a user equipment (UE) communicates through the satellite backhaul link.

19. The method according to any one of claims 15 to 18, further comprising:
measuring and determining a delay of the satellite backhaul link based on the QoS monitoring policy.

20. The method according to claim 19, further comprising at least one of:
sending a QoS monitoring report to the SMF; or
sending the QoS monitoring report to a sending object indicated by the QoS monitoring policy,
wherein the QoS monitoring report is at least configured to indicate the delay of the satellite backhaul link.

21. An information transmission apparatus, performed by a policy control function (PCF), comprising:
a transceiver module, configured to formulate a quality of service (QoS) monitoring policy and send the QoS monitoring policy to a session management function (SMF), wherein the QoS monitoring policy is at least associated with QoS monitoring of a satellite backhaul link.

22. An information transmission apparatus, performed by a session management function (SMF), comprising:
a transceiver module, configured to receive a quality of service (QoS) monitoring policy sent by a policy control function (PCF), wherein the QoS monitoring policy is at least associated with QoS monitoring of a satellite backhaul link.

23. An information transmission apparatus, performed by a user plane function (UPF), comprising:
a transceiver module, configured to receive a quality of service (QoS) monitoring policy sent by a session management function (SMF), wherein the QoS monitoring policy is at least associated with QoS monitoring of a satellite backhaul link, the QoS monitoring policy is sent by a policy control function (PCF) to the SMF.

24. A communication device, comprising:
a processor; and
a memory for storing instructions executable by the processor;
wherein the processor is configured to implement the information transmission method according to any one of claims 1 to 6, or any one of claims 7 to 14, or any one of claims 15 to 20 when running the executable instructions.

25. A computer storage medium, having a computer executable program stored thereon, wherein, when the executable program is executed by a processor, the information transmission method according to any one of claims 1 to 6, or any one of claims 7 to 14, or any one of claims 15 to 20 is implemented.

26. A communication system, comprising a policy control function (PCF), a session management function (SMF) and a user plane function (UPF), wherein the PCF is configured to implement the method according to any one of claims 1 to 6, the SMF is configured to implement the method according to any one of claims 7 or 14, and the UPF is configured to implement the method according to any one of claims 15 to 20.

27. A communication method, performed by a core network device, comprising:
in response to receiving indication information that a user equipment (UE) communicates through a satellite backhaul link, formulating or updating a quality of service (QoS) control policy and/or a charging policy;
measuring and determining a delay of the satellite backhaul link based on a QoS monitoring policy.

28. A communication method, performed by a core network device, wherein the core network device comprises a policy control function (PCF), a session management function (SMF) and a user plane function (UPF), and the method comprises:
formulating, by the PCF, a quality of service (QoS) monitoring policy and sending, by the PCF, the QoS monitoring policy to the SMF, wherein the QoS monitoring policy is at least associated with QoS monitoring of a satellite backhaul link;
sending, by the SMF, the QoS monitoring policy to the UPF;
measuring and determining, by the UPF, a delay of the satellite backhaul link based on the QoS monitoring policy;
sending, by the UPF, a QoS monitoring report to the SMF, wherein the QoS monitoring report is at least configured to indicate the delay of the satellite backhaul link;
sending, by the SMF, the QoS monitoring report to the PCF.

29. A communication system, configured to perform the method according to claim 27.
